# FASCICULE DE BREVET EUROPEEN

(11) **EP 1 917 646 B1**
(45) Date de publication et mention de la délivrance du brevet: **13.06.2012**
(21) Numéro de dépôt: 06776561.0
(22) Date de dépôt: 02.08.2006
(51) Int. Cl.: G07C 9/00, G07B 15/06

(54) **SYSTEME ET PROCEDE DE GESTION INTEROPERABLES DE SERVICES MULTIPLES GEOLOCALISABLES**
INTEROPERABLES SYSTEM UND VERFAHREN ZUR VERWALTUNG GEOLOKALISIERBARER MEHRERER DIENSTE
INTEROPERABLE SYSTEM AND METHOD FOR MANAGING GEOLOCATABLE MULTIPLE SERVICES

(30) Priorité: 02.08.2005 WO PCT/EP2005/008331
(43) Date de publication de la demande: 07.05.2008
(73) Titulaire: Galini Associates Ltd., Gibraltar (GI)
(72) Inventeur: STAGNETTO, Jonathan, Gibraltar (GB)
(86) Numéro de dépôt international: PCT/EP2006/007647
(87) Numéro de publication internationale: WO 2007/014765

(56) Documents cités:
- EP-A- 0 780 802
- EP-A- 1 271 416
- EP-A- 1 333 409
- US-A1- 2002 067 291
- US-A1- 2004 167 861
- US-B1- 6 490 443
- US-B1- 6 744 383

## Description

La présente invention a pour objet un système et un procédé de gestion interopérables de services multiples géo localisables. Elle trouve, notamment, mais pas uniquement, son application dans le domaine des services de transports à péage.

Plus généralement, la présente invention concerne une organisation particulière permettant à des utilisateurs de choisir parmi plusieurs prestataires, le ou les services qu'ils veulent acheter, le ou les services étant localisés à un endroit donné. Il peut s'agir par exemple de l'usage d'une route ou d'une autoroute, l'usage d'un parking, le bénéfice d'une assurance automobile, l'usage d'un train, etc ...

L'organisation permet aux utilisateurs d'accéder à ces services, sans limite géographique, de les utiliser, avec un contrôle aux fins de vérifier leur situation vis-à-vis du ou des services achetés, sans le besoin de disposer, à un quelconque moment, d'un titre spécifique à chaque service acheté tel qu'un billet ou un ticket, et sans ralentir le flux d'accès des utilisateurs aux services concernés.

L'organisation permet de surcroît aux prestataires de proposer des services ou des combinaisons de services, même de nature différente, spécifiquement adaptés à chaque utilisateur, et des tarifs pouvant évoluer de façon dynamique, en temps réel.

L'organisation permet enfin aux états et aux collectivités territoriales de disposer, en temps réel, d'informations leur permettant de gérer de façon dynamique, l'application de certains volets de leurs politiques sociale, environnementale, d'aménagement du territoire, etc ...

Aujourd'hui, l'achat ou l'utilisation de nombreux services se caractérise généralement par la remise d'un titre physique tel qu'un billet, ou un ticket, spécifique à chaque service, voire, pour un même service, à chaque prestataire.

Or, lorsque le titre n'est pas sécurisé, il peut être copié ou modifié. Une fraude peut alors se développer, au préjudice du prestataire comme des utilisateurs qui devront supporter ce manque à gagner.

Si, le titre est sécurisé, toute altération de ce titre peut contraindre l'utilisateur à devoir présenter un justificatif de l'achat de son titre lors de contrôles, voire, dans le pire des cas, à acquérir un nouveau titre.

Lorsque, comme dans le cas du péage routier, il faut permettre à un maximum d'utilisateurs d'accéder facilement aux services 24h/24h et 365 jours par an, le réseau établi pour diffuser le titre devient très coûteux, d'autant que le caractère spécifique du titre à un service ou à un prestataire, ne permet pas de mutualiser les infrastructures ni leur maintenance.

Par ailleurs, lorsqu'il faut retirer le titre à des points prédéterminés d'un réseau, de longues files d'attente peuvent se constituer, comme par exemple à un péage autoroutier, à la caisse d'un cinéma, etc ...

Mal gérées, ces files provoquent le mécontentement des utilisateurs qui, à l'extrême, renoncent à l'utilisation du service ou qui, exaspérés, ont parfois des comportements agressifs envers le personnel, dégradent les distributeurs automatiques de titres et réduisent le niveau d'attention du personnel et sa productivité. Ces files d'attente retardent ou interdisent l'accès aux services proposés et en limitent les performances économiques.

Bien gérées, ces files sont très coûteuses car elles nécessitent de multiplier les points d'accès. Dans l'exemple d'un réseau autoroutier, il est ainsi nécessaire de prévoir une barrière de péage à chaque entrée, et également, dans la plupart des cas, à chaque sortie d'un réseau autoroutier. Dans l'exemple d'un parking, il est nécessaire de prévoir plusieurs bornes d'encaissement de parking.

Le document US 2002/0067291 décrit un système de télépéage comportant des moyens pour suivre le trajet d'un véhicule sur une autoroute, rechercher une porte de sortie d'autoroute a proximité de se véhicule et facturer l'automobiliste en fonction de la route empruntée.

Par ailleurs, lorsque le titre est disponible à des points prédéterminés d'un réseau, l'approvisionnement de chaque point doit être suffisant, en nombre et en qualité, ce qui nécessite une gestion performante des stocks de titres.

De plus, lorsque l'encaissement du prix des services se fait au niveau de points prédéterminés d'un réseau, le risque de détournement de la recette, par malveillance ou par vol par exemple, oblige à sécuriser tous les points du réseau ainsi que la collecte des fonds.

Quand les titres représentent par eux-mêmes une valeur marchande, comme c'est le cas par exemple des titres relatifs aux taxes ou droits tirés sur le trésor public, ou des billets de spectacles, ce niveau de sécurité doit être renforcé.

Lorsque l'émetteur du titre vend un nombre de titres supérieur aux capacités d'accueil d'un service (surbooking), il peut arriver que des clients légitimes ne puissent y accéder. Dans ce cas, les compensations financières, légales ou commerciales, réduisent la profitabilité attendue par le prestataire.

Egalement, lorsqu'un titre physique est émis, aucune gestion dynamique des tarifs n'est possible, ni aucune offre alternative de substitution d'un service par un autre (par exemple : en cas de saturation d'une voie autoroutière, mise à disposition gratuite d'heures de parking). La régulation de l'accès aux services par la modulation des tarifs est inconcevable.

Il est ainsi difficile, voire impossible de prendre en compte des paramètres variables dont la fréquence de variation peut être élevée (par exemple : modulation, en fonction de la densité instantanée du trafic, des tarifs des droits de passage d'une autoroute).

De plus, le passage d'une formule tarifaire à une autre n'est guère aisé et oblige l'utilisateur à se rendre à l'un des points du réseau, voire même, dans certain cas, au point de l'achat initial, pour réaliser ce changement.

Enfin, les contrôles de validité des titres sont fastidieux notamment quand le nombre de formules est vaste et que les clients sont géographiquement éparpillés.

On connaît déjà de nombreuses organisations qui visent à améliorer l'achat de services par l'utilisation d'automates, de plateformes de réception d'appels téléphoniques, de plateformes internet permettant une inscription en ligne, ou encore de plateformes combinant plusieurs de ces modes. Elles aboutissent toutes, sous une forme ou une autre, à l'émission d'un titre spécifique et présentent toutes les inconvénients décrits antérieurement.

On connaît aussi, par exemple des documents US 6 744 843 et US 2004/167861, plusieurs organisations visant à faciliter l'accès aux services ou à en contrôler l'entrée et/ou la sortie. Elles font intervenir des personnes physiques ou des automates positionnés en des lieux prédéterminés, activés par des données présentes sur un support, transmises par un système communiquant ou par un système de reconnaissance (lecteur biométrique, lecteur de bandes magnétiques, lecteur de plaques minéralogiques, ...).

Toutes ces organisations sont inadaptées à des services pour lesquels les points d'accès sont nombreux, d'une part en raison de la longueur de leur durée de mise en oeuvre, d'autre part en raison de l'importance des infrastructures qu'elles nécessiteraient, enfin en raison du coût tant des investissements que de la maintenance qui en résulterait. De surcroît, les organisations qui impliquent la présence physique de personnes peuvent être interrompues par des arrêts de travail du personnel et celles recourant à des automates utilisent des systèmes spécifiques à un service et, le plus généralement, à un prestataire unique.

On connaît également de nombreuses organisations visant à faciliter le paiement. Elles utilisent toutes un support de paiement, soit directement (introduction dans un lecteur), soit indirectement (transmission des informations présentes sur le support). Elles connaissent toutes des difficultés similaires, encore renforcées lorsque l'utilisateur ne peut pas consulter ou disposer d'une facture détaillée des prestations consommées.

Enfin, on ne connaît aujourd'hui aucune organisation permettant à des prestataires offrant des services identiques ou différents, de proposer des services ou des combinaisons de services spécifiquement adaptés à chaque utilisateur, ni aucune organisation permettant à des prestataires de faire évoluer leur tarif, en temps réel et de façon dynamique en fonction de paramètres propres ou externes aux services ou aux combinaisons de services utilisés ou souscrits par l'utilisateur.

On ne connaît pas non plus d'organisation permettant aux états et aux collectivités territoriales de disposer, en temps réel, d'informations leur permettant de gérer de façon dynamique, l'application de leurs politiques publiques.

La présente invention permet donc, en découplant le titre du service sous-jacent, de gérer simultanément différents types de services proposés, pour chacun d'eux, éventuellement par plusieurs prestataires, de passer, à tout moment et en temps réel, d'une formule tarifaire à une autre et de bénéficier de ce changement sans délai de carence en fonction des services choisis, de facturer ces services, même lorsque leur prix évolue en fonction de paramètres variant constamment, par prestation unitaire ou par service ou de façon regroupée avec un classement analytique ou non, de compenser les créances croisées entre les prestataires et de fournir à chacun d'eux, et éventuellement à des tiers, les informations pertinentes nécessaires à leurs contrôles, à la gestion technique, financière et commerciale de leurs services ou au suivi de leurs politiques.

L'organisation de l'invention s'adapte, en particulier, aux services de transports (péage routier, assurance au kilomètre, transport ferroviaire, ...) et, de façon générale, à tous les services liés à des lieux dont l'accès est contrôlé (salles de spectacles, musées, parcs d'attraction, ...) et à tous les services « machine to machine » (M2M).

L'organisation de l'invention s'adapte également au regroupement des demandes d'achats d'utilisateurs souhaitant obtenir de prestataires, les services et/ou les produits les plus avantageux du marché.

La présente invention vise donc à remédier aux inconvénients précités, grâce à une méta organisation représentative des différents modes et moyens de télécommunication, de détection, de distribution, de gestion, de paiement, de centralisation et de compensation existants, ouverte simultanément à plusieurs prestataires et à plusieurs types de services différents qui, parce qu'elle découple le titre du service sous-jacent, ne nécessite plus de disposer, à un quelconque moment, d'un titre spécifique au service acheté (billet, ticket,...).

Elle permet ainsi de mutualiser les moyens utilisés dans un « Virtual Business Model » (VBM) en rupture avec les organisations passées et d'adapter, dans le temps et dans l'espace, les besoins de contrôle.

L'organisation proposée est constituée d'une plateforme servant d'interface avec les utilisateurs, joignable 24h/24h et 365 jours par an par tous les modes et moyens de télécommunication actuellement disponibles sur le marché (téléphonie fixe et mobile, internet, e-mail, télécopie, ...) et permettant d'intégrer les futurs moyens de communication. Elle permet aux utilisateurs de s'enregistrer de façon non spécifique à un service donné, d'acheter des services variés auprès de divers prestataires, de gérer, en temps réel, leurs choix de services et leurs caractéristiques (modification de formule tarifaire, ...) et de disposer, en temps réel, sur le support de leur choix (téléphone, assistant personnel numérique, e-mail, site internet dédié, ...), d'informations d'état détaillées des prestations choisies et/ ou utilisées.

L'organisation proposée est également constituée d'un ensemble cohérent de systèmes permettant le traitement de localisations obtenues à partir d'un moyen de positionnement (par exemple GPS, triangulation, balises, ...) en vue d'obtenir le paiement du service utilisé et le contrôle associé au traitement des fraudes éventuelles.

L'organisation proposée est enfin constituée d'une base de données dans laquelle sont enregistrées les informations relatives aux abonnés et aux utilisateurs effectifs du/des services, celles provenant des systèmes de traitement des localisations et des systèmes de contrôle, les informations propres à chaque service et à chaque prestataire (formules tarifaires, paramètres de modulations tarifaires, ... ), l'ensemble des procédures et éléments permettant l'utilisation de la base de données à des fins de contrôle (des utilisateurs, du gestionnaire de l'organisation, des prestataires, des tiers, ...), de calcul, de centralisation, de facturation et de paiement, de compensation des créances croisées entre les différents prestataires, et de façon générale, toutes les informations nécessaires au fonctionnement, à la maintenance et à la mesure de la performance de l'organisation par le gestionnaire et/ou des tiers.

La base de données permet notamment de gérer simultanément plusieurs prestataires et différents types de services avec leurs spécificités propres, y compris des services régulés de façon dynamique à partir de paramètres variables, même externes aux services utilisés ou souscrits, dont le nombre et la fréquence ne sont pas limités.

Tous les éléments constituant cette organisation sont intégrés dans un réseau de télécommunication permettant l'échange d'informations, notamment, entre les utilisateurs et l'organisation proposée, entre les différents éléments constituant l'organisation proposée, entre ces éléments et des dispositifs éventuellement nécessaires à leur fonctionnement, à leur maintenance et à la mesure de la performance de l'organisation proposée, entre l'organisation proposée et des dispositifs éventuellement nécessaires pour déterminer le niveau des paramètres de régulation des services, entre l'organisation proposée et les dispositifs de contrôle et de sanctions des infractions associés aux services, entre l'organisation proposée et des tiers.

L'organisation proposée apporte ainsi, aux prestataires comme aux utilisateurs, un avantage économique significatif par rapport aux autres organisations existantes, en rendant les services interopérables, en mutualisant les moyens de gestion et de facturation des différents services fournis par les différents prestataires, tout en augmentant la productivité et en réduisant, de façon importante, tous les coûts d'infrastructure, de fonctionnement, de maintenance, et de contrôle. Cet avantage est d'autant plus important que l'organisation proposée n'est pas limitée à un nombre déterminé de prestataires ou de service, ni à une zone géographique particulière.

En centralisant toutes les prestations consommées, l'organisation proposée allège la comptabilisation des services utilisés, en ouvrant la possibilité à l'utilisateur de disposer d'une facture unitaire ou d'une facture groupée au niveau de détail analytique défini de façon dynamique par lui. Elle facilite ainsi aux utilisateurs leurs contrôles et leur gestion.

En centralisant tous les incidents de paiement, l'organisation proposée apporte de surcroît aux prestataires, une plus grande sécurité quant à la solvabilité des utilisateurs et peut constituer un outil dynamique de prévention des incidents de paiement car un utilisateur qui ne paye pas un des services, perd la possibilité de bénéficier de tous les autres services disponibles.

Plus généralement, l'invention se rapporte donc, selon un premier aspect, à un système de gestion interopérable de services multiples géo localisables tels que definis dans les revendications 1 à 12.

Le système comprend une base de données, et un module de gestion de cette base de données.

De façon caractéristique, la base de données comprend des informations d'identification d'une pluralité d'utilisateurs, d'une pluralité de services dont la localisation de ces services, et d'une pluralité de prestataires, ainsi que des informations d'autorisation d'accès des utilisateurs à un ou plusieurs desdits services

Par ailleurs, le module de gestion comprend un sous-module de réception des informations de localisation et d'identification de l'utilisateur transmises par le moyen de transmission.

Le module de gestion comprend également un sous-module de comparaison des informations de localisation de l'utilisateur avec les informations de localisation des services.

Le module de gestion comprend enfin un sous-module de contrôle de l'autorisation d'accès de l'utilisateur à un service parmi la pluralité de services, proposé par le prestataire parmi la pluralité de prestataires.

Ainsi le système de l'invention permet l'accès contrôlé des utilisateurs à des services multiples, sans moyens physiques de détection d'accès disposés à proximité des services et/ou en plusieurs points du réseau constituant le service.

Le système de l'invention résout donc notamment les problèmes, que l'on rencontre dans l'état de la technique, d'incompatibilité des bornes ou moyens de détection de l'accès à plusieurs services différents proposés par plusieurs prestataires différents, et de saturation de l'accès aux divers services du fait du passage obligé à proximité d'une telle borne ou d'un tel moyen de détection.

Le système de l'invention résout également toutes les difficultés liées à l'interopérabilité entre prestataires d'un même service et ce, sans limite géographique.

Dans une première variante, le moyen de transmission régulière ou intermittente d'informations de localisation et d'identification de l'utilisateur est de type téléphone portable et/ou assistant personnel numérique.

Dans une autre variante, éventuellement en combinaison avec la précédente, au moins un des services parmi la pluralité de services étant un service à péage, le module de gestion comprend un sous-module de calcul du coût de l'accès par l'utilisateur donné au service donné.

Dans encore une autre variante, éventuellement en combinaison avec l'une ou plusieurs quelconques des précédentes, le système comprend des moyens de contrôle et d'interdiction de l'accès de l'utilisateur au service, activables préalablement à, et/ou pendant, et/ou après l'utilisation du service.

De préférence, les moyens de contrôle et d'interdiction de l'accès de l'utilisateur au service, activables préalablement à, et/ou pendant, et/ou après l'utilisation du service, comprennent un moyen d'intervention situé à proximité ou non de l'utilisateur, et le module de gestion comprend un sous-module de transmission d'une information d'interdiction au moyen d'intervention.

Dans encore une autre variante, éventuellement en combinaison avec l'une ou plusieurs quelconques des précédentes, le système comprend une interface utilisateur permettant à un utilisateur de s'inscrire, dans la base de données, à un service donné d'un prestataire donné, de mettre à jour et de recevoir ses informations personnelles et celles relatives au service donné et au prestataire donné.

Dans encore une autre variante, éventuellement en combinaison avec l'une ou plusieurs quelconques des précédentes, le système comprend une interface prestataire permettant à un prestataire de s'inscrire, dans la base de données, pour la mise à disposition d'un service donné, pour mettre à jour et recevoir ses informations relatives à ce service donné.

Dans encore une autre variante, éventuellement en combinaison avec l'une ou plusieurs quelconques des précédentes, l'utilisateur pouvant au cours d'une période donnée consommer un ou plusieurs services donnés mis à disposition par un ou plusieurs prestataires différents, le module de gestion comprend un sous-module de centralisation des services consommés, permettant de regrouper sur une même facture tout ou partie des services consommés durant la période donnée.

Dans encore une autre variante, éventuellement en combinaison avec l'une ou plusieurs quelconques des précédentes, le module de gestion comprend un sous-module de compensation des créances croisées entre plusieurs prestataires.

Dans encore une autre variante, éventuellement en combinaison avec l'une ou plusieurs quelconques des précédentes, le module de gestion comprend un sous-module de centralisation des incidents de paiement.

Dans encore une autre variante, éventuellement en combinaison avec l'une ou plusieurs quelconques des précédentes, le module de gestion comprend un sous-module de centralisation des infractions et des sanctions, permettant notamment de prévenir et de gérer la récidive d'infraction.

Dans encore une autre variante, éventuellement en combinaison avec l'une ou plusieurs quelconques des précédentes, le module de gestion comprend un moyen d'horodatage de l'accès de l'utilisateur au service du prestataire et/ou de la durée d'utilisation de ce dit service.

L'invention se rapporte également, selon un deuxième aspect, à un procédé de gestion interopérable de services multiples géo localisables tel que défini dans les revendications 13 à 15.

De façon caractéristique, le procédé comprend une étape de transmission, par un moyen de transmission régulière ou intermittente, d'informations de localisation et d'identification d'un utilisateur.

Il comprend également une étape de réception par un moyen de contrôle de l'accès d'un utilisateur à un service, d'informations de localisation et d'identification de l'utilisateur.

Il comprend encore une étape de comparaison des informations de localisation de l'utilisateur avec les informations de localisation des services stockées dans une base de données, cette base de données comprenant également des informations d'identification d'une pluralité d'utilisateurs, et d'une pluralité de prestataires, ainsi que des informations d'autorisation d'accès des utilisateurs à un ou plusieurs des services.

Enfin, dans le cas où les informations de localisation de l'utilisateur coïncident avec les informations de localisation d'un service, le procédé comprend une étape de contrôle de l'autorisation d'accès de l'utilisateur

Dans une première variante, le procédé comprend une étape de facturation à l'utilisateur de son accès au service du prestataire et/ou de la durée d'utilisation de ce service.

Dans une autre variante, éventuellement en combinaison avec la précédente, le procédé comprend une étape de constatation d'infraction, lorsque l'étape de contrôle de l'autorisation d'accès de l'utilisateur au service montre que l'utilisateur n'est pas enregistré dans la base de données pour le service ou que le droit de l'utilisateur d'accéder au service est invalide.

D'autres caractéristiques et avantages de l'invention apparaîtront plus clairement et de manière complète à la lecture de la description ci-après des variantes préférées de réalisation du système et de mise en oeuvre du procédé, lesquelles sont données à titre d'exemples non limitatifs et en référence au dessin annexé suivant.

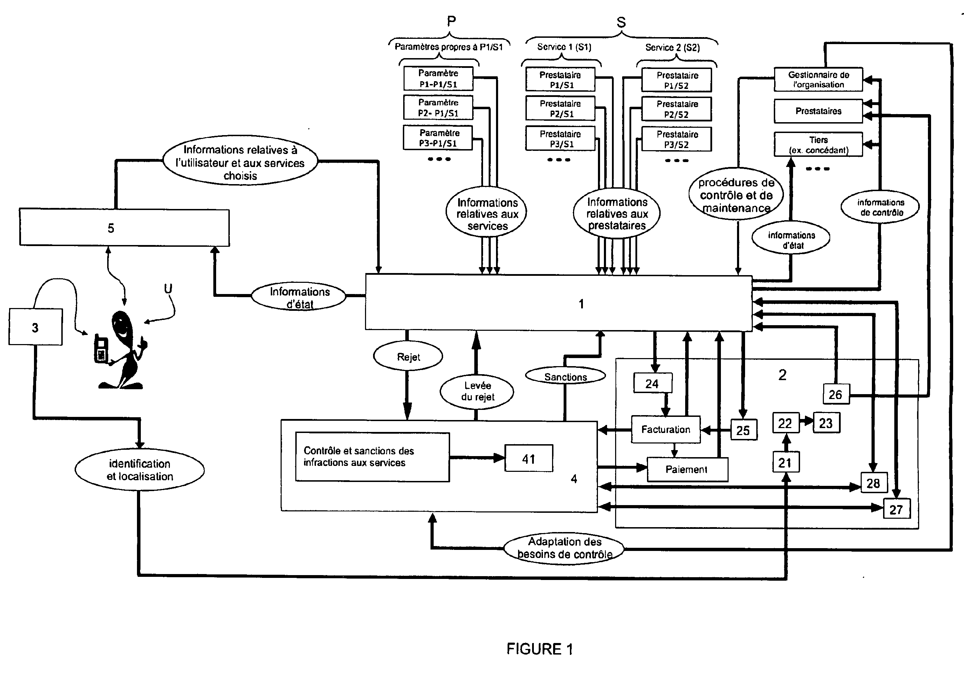

- figure 1 : représente schématiquement une variante de réalisation du système de l'invention.

L'invention sera en effet mieux comprise à la lecture de la description schématique qui va suivre relativement à la figure 1, donnée uniquement à titre indicatif, qui représente un exemple d'une organisation permettant à un utilisateur U d'accéder avec son véhicule à un tronçon routier soumis à péage sur lequel il bénéficie d'un service d'assistance lui permettant d'être informé par exemple sur son assistant personnel numérique ou sur son ordinateur de bord, ou encore sur son téléphone portable 3, des temps de trafic sur l'axe routier choisi, puis de stationner son véhicule dans un parking afin de prendre un train.

Ces moyens tels qu'un assistant personnel numérique ou un ordinateur de bord, ou encore un téléphone portable 3, sont également équipés d'un système de positionnement, par exemple de type GPS, de sorte qu'ils ont également pour fonction la transmission régulière ou intermittente d'informations de localisation et d'identification de l'utilisateur U.

Le système comprend donc une base de données 1, et un module de gestion 2 de cette base de données 1.

La base de données 1 comprend notamment des informations d'identification d'utilisateurs U, de services S et de prestataires P, ainsi que des informations d'autorisation d'accès des utilisateurs U à un ou plusieurs services S.

Les informations d'identification de services S comprennent notamment les informations de localisation géographique de services S.

Le module de gestion 2 comprend un sous-module 21 de réception des informations de localisation et d'identification de l'utilisateur U transmise par le moyen de transmission, par exemple le téléphone portable 3.

Le module de gestion 2 comprend également un sous-module 22 de comparaison des informations de localisation de l'utilisateur U avec les informations de localisation des services S stockées dans la base de données 1.

Le module de gestion 2 comprend encore un sous-module 23 de contrôle de l'autorisation d'accès de l'utilisateur U à un service S, en fonction des informations d'identification qui sont transmises par le moyen de transmission, par exemple le téléphone portable 3, et des informations d'identification et d'autorisation présentes dans la base de données 1.

Dans le cas où le moyen de transmission comprend un téléphone portable 3, l'information d'identification de l'utilisateur U peut-être son numéro de téléphone portable.

Le module de gestion 2 peut comprendre un sous-module 24 de calcul du coût de l'accès par l'utilisateur U au service S ou de sa consommation, qui sera expliqué plus en détail relativement à l'exemple d'utilisation du système présenté ci-dessous.

Eventuellement, le système comprend des moyens 4 de contrôle et d'interdiction de l'accès de l'utilisateur U au service S. qui comprennent eux-mêmes un moyen 41 d'intervention à proximité ou non de l'utilisateur U, et qui seront également expliqué plus en détail relativement à l'exemple d'utilisation du système présenté ci-dessous. Ces moyens 4 de contrôle et d'interdiction sont activables préalablement à et/ou pendant et/ou après l'utilisation du service.

Dans une première étape et s'il s'agit de son premier contact avec la plateforme ou interface 5, l'utilisateur U, quelque soit le lieu géographique où il se trouve, contacte cette plateforme ou interface 5 par le moyen de son choix (par exemple : site internet, téléphone fixe ou mobile, e-mail, ...), pour indiquer les informations permettant de l'identifier et de le positionner (par exemple son numéro de téléphone mobile) et/ou d'identifier et de positionner le véhicule utilisé (par exemple, son numéro de plaque minéralogique ou plaque d'immatriculation, références de son dispositif de positionnement et de transmission des positions).

Pour le péage routier, nul besoin de préciser au préalable un itinéraire. L'utilisateur U est détecté automatiquement dès la mise sous tension du moyen 3.

Pour le service d'assistance, aucune confirmation n'est nécessaire, ce service entrera en fonction dès la mise sous tension du moyen 3.

Pour le stationnement, là aussi, tout est automatisé dès la mise sous tension du moyen 3.

Pour le train, U doit indiquer à la plateforme ou interface 5 le train qu'il souhaite prendre (heure et destination). U peut bénéficier de services d'aide à la décision si, par exemple, il souhaite bénéficier des meilleurs tarifs pour une destination donnée ou simplement connaître tous les horaires de train pour la destination indiquée.

U transmet également à la plateforme ou interface 5 les informations bancaires permettant le paiement du service acheté ou consommé et celles relatives au support choisi (par exemple son assistant personnel numérique).

Bien évidemment, si U a déjà transmis auparavant ces informations générales à la plateforme ou interface 5, il lui suffit d'indiquer les informations spécifiques, ici celles relatives au train choisi.

Le service d'informations de trafic transmet par exemple sur l'assistant personnel numérique ou le téléphone portable 3 de U les données durant toute la durée de présence de U sur la portion routière soumise à péage.

U peut stationner son véhicule au parking sans autre formalité, les systèmes de positionnement associés au moyen 3 précisant sa date d'entrée et de sortie.

Bien évidemment, aucun arrêt n'est nécessaire à l'entrée du parking, rendant ainsi très fluide le réseau routier, l'accès et la sortie du parking.

Quand U arrive à la gare, il n'a pas besoin de faire la queue au guichet car il n'a pas besoin de billet. U reçoit sur son assistant personnel numérique ou sur son portable 3 la place qui lui est assignée. Le contrôleur reçoit parallèlement par exemple sur son assistant personnel numérique, toutes les places assignées.

Des dispositifs de contrôle, fixes ou mobiles, permettront de reconnaître le numéro de téléphone de U, la plaque minéralogique de son véhicule, ... Ces dispositifs de contrôle seront disposés aux accès des services (entrée et sortie du parking, accès et descente du train) et / ou de façon aléatoire tout au long de l'infrastructure supportant les services (exemple réseau routier)

Si le véhicule de U ou U lui-même n'est pas enregistré dans la base de données 1 pour le service S utilisé (par exemple utilisation de la portion routière soumise à péage, train, ...) ou si son droit au service S n'est pas valide (par exemple forfait dépassé, ...), dès la reconnaissance de sa plaque d'immatriculation ou de son numéro de téléphone mobile 3, une information est transmise au module de gestion 2 de la base de données 1. Celui-ci transmet l'information au moyen 4 de contrôle et de sanctions des infractions lié au service S (par exemple les forces de l'ordre ou une brigade spéciale) pour levée ou confirmation de l'infraction.

Afin de prévenir la récidive, l'utilisateur U qui aura été sanctionné pour une infraction peut être enregistré dans la base de données 1 dans un registre des infractions et des sanctions, avec comme conséquence pour lui, l'impossibilité, jusqu'à régularisation complète de sa situation, d'accéder au service concerné, et/ou éventuellement à d'autres services.

En fonction du moment où le service est utilisé, la base de données 1 sélectionne le tarif correspondant, en tenant éventuellement compte des paramètres de modularité du tarif (par exemple le niveau d'ozone atmosphérique, période d'affluence pour le train) et transmet ces informations au sous-module de calcul 24, de facturation et de paiement, éventuellement de compensation 26, qui déterminent le montant à payer, établissent la facturation détaillée, procèdent au paiement du service consommé et transmettent ces divers éléments à la base de données 1 en vue notamment de mettre à la disposition de U ces éléments d'information sur le support choisi (par exemple son assistant personnel numérique).

Le module de gestion 2 peut également contenir un sous-module 27 de centralisation des incidents de paiement, permettant notamment de prévenir les impayés. Il peut également contenir un sous-module 28 de centralisation des infractions et des sanctions, permettant notamment de prévenir et de gérer la récidive d'infraction, ainsi qu'un sous-module 25 de centralisation des services consommés, permettant de regrouper sur une même facture tout ou partie des services consommés durant la période donnée

Si U ne peut pas ou ne veut pas être localisé, U ne pourra souscrire qu'aux services forfaitaires. Il devra cependant s'enregistrer dans la base de données 1 et indiquer son identifiant et l'identifiant de son véhicule ou des supports qu'il utilisera pour accéder aux services disponibles.

A tout moment, U peut contacter la plateforme ou interface 5 pour modifier les services demandés comme par exemple le passage d'un forfait journalier à un tarif au kilomètre pour le péage routier.

Si l'on voit clairement tous les avantages pour l'utilisateur U, ceux-ci sont tout aussi importants pour les autres intervenants (prestataires P, gestionnaire de l'organisation, tiers) qui optimiseront, en temps réel, leurs offres aux besoins réels des utilisateurs et ce, à frais réduits tout au long de la chaîne opérationnelle.

Il est rappelé enfin que l'ensemble de la description ci-dessus est donné à titre d'exemple et n'est pas limitatif de l'invention.

En particulier, l'organisation des différents modules, sous-modules, compris dans le système de l'invention et représentés à la figure 1, est donnée sous une forme de représentation fonctionnelle. Elle n'est donc pas limitative de l'invention, de sorte que les différents sous-modules représentés à la figure 1 imbriqués fonctionnellement dans un module pourront tout aussi bien se trouver localisés physiquement ou logiquement hors de ce module. De même, deux modules ou sous-modules représentés à la figure 1 séparés fonctionnellement pourront tout aussi bien se trouver imbriqués physiquement ou logiquement.

Egalement, l'utilisation d'un téléphone portable ou encore d'un assistant personnel numérique en tant que moyen 3 de transmission des données de localisation et d'identification de l'utilisateur U, n'est évidemment pas limitative de l'invention. Tout moyen de transmission de télécommunications en mode voix et/ou données peut convenir, qu'il s'agisse notamment d'une transmission téléphonique de type wifi, wimax, satellite, ...

## Revendications

1. Système de gestion interopérable de services multiples géolocalisables mais non limités à une zone géographique particulière (S) proposés par des prestataires (P) et accessibles par péage à des utilisateurs (U) porteurs d'un moyen (3) de transmission régulière ou intermittente d'informations de localisation et d'identification, ce système permettant aux utilisateurs de s'enregistrer de façon non spécifique à un service donné, ce système comprenant une base de données (1), un module de gestion (2) de ladite base de données (1), **caractérisé en ce que**, aucun moyen physique de détection d'accès n'étant disposé à proximité desdites services :
- ladite base de données (1) permettant de gérer simultanément différents types de service, y compris des services régulés de façon dynamique à partir de paramètres variables comprend des informations d'identification d'une pluralité d'utilisateurs (U), d'une pluralité de services (S) dont la localisation desdits services (S), et d'une pluralité de prestataires (P), ainsi que des informations d'autorisation d'accès desdits utilisateurs (U) à un ou plusieurs desdits services (S),
- ledit module de gestion (2) comprend :
i. un sous-module (21) de réception automatique desdites informations de localisation et d'identification de l'utilisateur (U) transmises par ledit moyen (3) de transmission,
ii. un sous-module (22) de comparaison automatique desdites informations de localisation dudit utilisateur (U) avec lesdites informations de localisation desdits services (S),
iii. un sous-module (23) de contrôle automatique de l'autorisation d'accès dudit utilisateur (U) à un service (S) parmi ladite pluralité de services, proposé par ledit prestataire (P) parmi ladite pluralité de prestataires, en fonction desdites informations d'autorisation d'accès et d'identification de l'utilisateur (U) dans la base de données (1), la base de données comportant des moyens pour sélectionner un tarif correspondant à un service utilisé en tenant compte desdits paramètres et à transmettre ces informations à un sous-module de calcul (24) dudit système apte à calculer un montant à payer pour ledit service.

2. Système selon la revendication 2, **caractérisé en ce que** le moyen (3) de transmission régulière ou intermittente d'informations de localisation et d'identification de l'utilisateur (U) est de type téléphone portable.

3. Système selon l'une quelconque des revendications 1 et 2, au moins un des services parmi la pluralité de services étant un service à péage, **caractérisé en ce que** le module (2) de gestion comprend un sous-module (24) de calcul du coût de l'accès par l'utilisateur (U) donné au service (S) donné.

4. Système selon l'une quelconque des revendications 1 à 3, **caractérisé en ce qu'**il comprend des moyens (4) de contrôle et d'interdiction de l'accès de l'utilisateur (U) au service (S), activables préalablement à, et/ou pendant, et/ou après l'utilisation du service (S).

5. Système selon la revendication 4, **caractérisé en ce que** les moyens (4) de contrôle et d'interdiction de l'accès de l'utilisateur (U) au service (S), activables préalablement à, et/ou pendant, et/ou après l'utilisation du service (S), comprennent un moyen (41) d'intervention situé à proximité ou non de l'utilisateur (U), et le module de gestion (2) comprend un sous-module de transmission d'une information d'interdiction au moyen (41) d'intervention.

6. Système selon l'une quelconque des revendications 1 à 5, **caractérisé en ce qu'**il comprend une interface utilisateur (5) permettant à un utilisateur (U) de s'inscrire, dans la base de données (1), à un service (S) donné d'un prestataire (P) donné, de mettre à jour et de recevoir ses informations personnelles et celles relatives audit service (S) donné et audit prestataire (P) donné.

7. Système selon l'une quelconque des revendications 1 à 6, **caractérisé en ce qu'**il comprend une interface prestataire permettant à un prestataire (P) de s'inscrire, dans la base de données (1), pour la mise à disposition d'un service (S) donné, pour mettre à jour et recevoir ses informations relatives audit service (S) donné.

8. Système selon l'une quelconque des revendications 1 à 7, ledit utilisateur (U) pouvant au cours d'une période donnée consommer un ou plusieurs services (S) donnés mis à disposition par un ou plusieurs prestataires (P) différents, **caractérisé en ce que** le module de gestion (2) comprend un sous-module (25) de centralisation des services (S) consommés, permettant de regrouper sur une même facture tout ou partie des services (S) consommés durant la période donnée.

9. Système selon l'une quelconque des revendications 1 à 8, **caractérisé en ce que** ledit module (2) de gestion comprend un sous-module (26) de compensation des créances croisées entre plusieurs prestataires (P).

10. Système selon l'une quelconque des revendications 1 à 9, **caractérisé en ce que** ledit module (2) de gestion comprend un sous-module (27) de centralisation des incidents de paiement.

11. Système selon l'une quelconque des revendications 1 à 10, **caractérisé en ce que** ledit module (2) de gestion comprend un sous-module (28) de centralisation des infractions et des sanctions, permettant notamment de prévenir et de gérer la récidive d'infraction.

12. Système selon l'une quelconque des revendications 1 à 11, **caractérisé en ce que** le module de gestion (2) comprend un moyen (29) d'horodatage de l'accès de l'utilisateur (U) au service (S) du prestataire (P) et/ou de la durée d'utilisation de ce dit service (S).

13. Procédé de gestion interopérable de services multiples géolocalisables (S) mais non limités à une zone géographique particulière proposés par des prestataires (P) et accessibles par péage par des utilisateurs (U), ledit procédé étant informatisé au moyen d'un système informatique, ce système permettant aux utilisateurs de s'enregistrer de façon non spécifique à un service donné comportant une base de données (1) et un module de gestion (2) de cette base de données (1), cette base de données (1) permettant de gérer simultanément différents types de service, y compris des services régulés de façon dynamique à partir de paramètres variables et comprenant :
- des informations d'identification d'une pluralité d'utilisateurs (U),
- des informations d'identification d'une pluralité de services (S) comprenant des informations de localisation desdits services (S),
- des informations d'identification d'une pluralité de prestataires (P),
- des informations d'autorisation d'accès desdits utilisateurs (U) à un ou plusieurs desdits services (S),
ledit procédé étant **caractérisé en ce qu'**il comprend :
- une étape de transmission automatique, par un moyen (3) de transmission régulière ou intermittente associé à un utilisateur (U), d'informations de localisation et d'identification dudit utilisateur (U),
- une étape de réception automatique, desdites informations de localisation et d'identification dudit utilisateur (U),
- une étape de comparaison automatique, desdites informations de localisation dudit utilisateur (U) reçues à ladite étape de réception automatique, avec lesdites informations de localisation des services (S) stockées dans ladite base de données (1),
- si ladite étape de comparaison automatique montre que lesdites informations de localisation dudit utilisateur (U) coïncident avec lesdites informations de localisation d'un service (S), une étape de contrôle automatique de l'autorisation d'accès dudit utilisateur (U) audit service (S) en fonction desdites informations d'autorisation d'accès et didentification de l'utilisateur (U) dans la base de données (1),
- une étape de sélection d'un tarif correspondant à un service utilisé en tant compte desdits paramètres et ,
- une étape de calcul d'un montant à payer pour ledit service en fonction du tarif sélectionné à l'étape de sélection,
ledit procédé étant également caractérisé en ce qu"il n'utilise aucun moyen physique de détection d'accès disposé à proximité desdites services.

14. Procédé selon la revendication 13, **caractérisé en ce qu'**il comprend une étape de facturation à l'utilisateur (U) de son accès au service (S) du prestataire (P) et/ou de la durée d'utilisation de ce dit service (S).

15. Procédé selon l'une quelconque des revendications 13 et 14, **caractérisé en ce qu'**il comprend une étape de constatation d'infraction, lorsque l'étape de contrôle de l'autorisation d'accès de l'utilisateur (U) au service (S) montre que ledit utilisateur (U) n'est pas enregistré dans la base de données (1) pour ledit service (S) ou que le droit dudit utilisateur (U) d'accéder audit service (S) est invalide.

## Claims

1. A system for managing multiple geolocatable services but not restricted within the limits of a specific geographical area (S) proposed by service providers (P) and accessible, by tolling, to users (U) equipped with [[a]] transmission means (3) for regular or intermittent transmission of user location and identification data, allowing a user to register in a non-specific manner to a specific service, including a database (1) and a management module (2) for [[the]] said database (1), **characterised in that**, no physical means near the areas in which the said services are available being required to detect the access to the service :
- [[the]] said database (1) provides data for simultaneously managing different classes of services, including services dynamically regulated by variable parameters, and includes identification data that identifies a multiplicity of users (U), of a multiplicity of services (S), including respective locations of [[the]] said services (S), and of a multiplicity of service providers (P), as well as access authorisation data for use in authorizing access by [[the]] said users (U) to one or more of [[the]] said services (S),
- [[the]] said management module (2) including:
i. a sub-module (21) for automatically receiving [[the]] said identification and location data of said user (U), transmitted by [[the]] said transmission means (3),
ii. a sub-module (22) for automatically comparing said location data of [[the]] said user (U) with [[the]] said location data of [[the]] said services to determine whether the user is using said services (S),
iii. a sub-module (23) for automatically verifying authorisation of access by [[the]] said user (U) to a service (S) from among [[the]] said multiplicity of services proposed by [[the]] said service provider (P) from among [[the]] said multiplicity of service providers, depending on said access authorization and user identification information (U) in the database (1), the database including means for allowing price selection corresponding to a service when consumed according to said parameters, including time and modifications to services, and for sending the information to a sub-module for computation (24) of a price corresponding to the consumed service based on the parameters.

2. [[A]] The system according to claim 2, **characterised in that** the transmission means (3) for regular or intermittent transmission of user location and identification data is of a [[the]] mobile telephone [[type]].

3. [[A]] The system according to either of claims 1 and 2, in which at least one of the services from among the multiplicity of services is a toll service, **characterised in that** the management module (2) includes a sub-module (24) to calculate the cost of access by the given user (U) to the given service (S).

4. [[A]] The system according to any one of claims 1 to 3, **characterised in that** it includes control means (4) for control and interdiction of access by the user (U) to the service (S), which can be activated prior to and/or during and/or after the use of the service (S).

5. [[A]] The system according to claim 4, **characterised in that** the control means (4) for control and interdiction of access by the user (U) to the service (S), which can be activated prior to and/or during and/or after the use of the service (S), include a means (41) of intervention, whether located close to the user or not (U), and the management module (2) includes a sub-module for the transmission of an interdiction data to the means (41) of intervention.

6. [[A]] The system according to any one of claims 1 to 5, **characterised in that** it includes a user interface (5) that allows a user (U) to subscribe, in the database (1), to a given service (S) of a given service provider (P), to update and receive his personal data and those relating to [[the]] said given service (S) and to [[the]] said given service provider (P).

7. [[A]] The system according to any one of claims 1 to 6, **characterised in that** it includes a service provider interface that allows a service provider (P) to subscribe, in the database (1), for the provision of a given service (S), and to update and receive information relating to [[the]] said given service (S).

8. [[A]] The system according to any one of claims 1 to 7, where [[the]] said user (U) is able, during a given period, to consume one or more given services (S) made available by one or more different service providers (P), **characterised in that** the management module (2) includes a sub-module (25) for centralising the services (S) consumed, allowing consolidation into a single bill of all or part of the services (S) consumed during the given period.

9. [[A]] The system according to any one of claims 1 to 8, **characterised in that** [[the]] said management module (2) includes a sub-module (26) for payment of [[the]] crossover debts between several service providers (P).

10. [[A]] The system according to any one of claims 1 to 9, **characterised in that** the said management module (2) includes a sub-module (27) for centralising payment incidents.

11. [[A]] The system according any one of claims 1 to 10, **characterised in that** [[the]] said management module (2) includes a sub-module (28) for centralising infringements and punishments, in particular allowing the prevention and management of repeat infringement.

12. [[A]] The system according to any one of claims 1 to 11, **characterised in that** the management module (2) includes a means (29) for time and date stamping of the access by the user (U) to the service (S) of the service provider (P), and/or of the length of use of [[this]] said service (S).

13. A method for the interoperable management of multiple geolocatable services (S) but not restricted within the limits of a specific geographical area proposed by service providers (P) and accessible to users (U) by toll charging, the said method is computerized and allows a user to register in a non-specific manner to a specific service including a database (1) and a management module (2) of the database (1) allowing simultaneous management of different classes of services, including services dynamically regulated by variable parameters and including:
- identification data of a multiplicity of users (U),
- identification data of a multiplicity of services (S), including the location of the services (S),
- identification data of a multiplicity of service providers (P),
- authorization data of access by the users (U) to one or more of the services (S),
the method including:
- automatically transmitting the user (U) location and identification data by using [[a]] transmission means (3) for regular or intermittent transmission which equip the user (U);
- automatically receiving location and identification data of [[the]] said user (U);
- automatically comparing the location data of [[the]] said user (U) to [[with]] the location data of the services (S) stored in [[a]] the database (1),
- wherein if the location data of the user (U) matches the location data of the service (S), authorization of the user (U) to the said service (S) is automatically verified based on identification and authorization data of the user (U) stored in [[a]] the database (1),
- selecting a price corresponding to the service when consumed, wherein the price is based upon service parameters and
- computing a price corresponding to the service when consumed, wherein the price is the price selected previously the said method, is also **characterised in that** it does not require physical means near the area in which the said services are available to detect the access to the said services.

14. The [[A]] method according to claim 13, further comprising billing the user (U) for [[its]] access to the service (S) of the service provider (P) and/or for the length of use of [[this]] said service (S).

15. The [[A]] method according to any one of claims 13 and 14, further comprising observing infringements, when the stage to control the authorisation of access by the user (U) to the service (S) shows that the said user (U) is not registered in the database (1) for the said service (S) concerned, or that the right of the said user (U) to access the said service (S) is invalid.

## Patentansprüche

1. System einer übergreifenden Steuerung mehrerer geolokalisierbarer Dienstleistungen, die nicht auf eine bestimmte geografische Zone begrenzt sind, das von verschiedenen Dienstleistern (D) über eine Zahlstelle Benutzern (B) mit einem Übertragungsgerät (3) angeboten wird, das ständig oder zeitweilig Informationen zur Lokalisierung und Identifizierung übermitteft.
Dieses System ermöglicht den Benutzern, sich allgemein für eine bestimmte Dienstleistung einzutragen, beinhaltet eine Datenbank (1) und deren Steuerungsmodul (2), das **dadurch gekennzeichnet ist, dass** es über keine physikalische Zugangserfassung in der Nähe dieser Dienstleistungen verfügt.:
- diese Datenbank (1) ermöglicht gleichzeitig verschiedene Dienstleistungen zu steuern, einschließlich Dienstleistungen, die ausgehend von veränderbaren Parametern dynamisch reguliert werden, und beinhaltet Identifizierungsinformationen mehrerer Benutzer (B) mehrerer Dienstleistungen (Dg) - u. a. die Lokalisierung dieser Dienstleistung (Dg) - und einer Vielzahl von Dienstleistern (D), sowie Informationen über die Zugangsberechtigung dieser Benutzer (B) zu einer oder mehreren bestimmten Dienstleistungen (Dg),
- das genannte Steuerungsmodul (2) beinhaltet:
i. ein Sub-Modul (21), das automatisch die genannten Informationen zur Lokalisierung und zur Identifizierung des Benutzers (B) mittels des bestimmten Übertragungsgerätes (3) empfängt.
ii. Ein Sub-Modul, (22), das automatisch die genannten Lokalisierungsinformationen des bestimmten Benutzers (B) mit den Lokalisierungsinformationen der bestimmten Dienstleistungen (Dg) vergleicht.
iii. Ein Sub-Modul (23) der automatischen Kontrolle der Zugangsberechtigung des bestimmten Benutzers (B) zu einer der Dienstleistungen (Dg) aus der festgelegten Vielzahl der Dienstleistungen, die von dem bestimmten Dienstleister (D) angeboten werden, in Abhängigkeit dieser Informationen über die Zugangsberechtigung und der Identifizierung der Benutzers (B) in der Datenbank (1), die einen Preis enthält gemäss einer benutzten Dienstleistung unter Berücksichtigung der festgelegten Parameter, und die diese Informationen an ein Sub-Kalkulations-Modul (24) übermitteft, welches einen Zahlungsbetrag für die erbrachte Dienstleistung kalkulieren kann.

2. System gemäß der Anforderung 2, **dadurch gekennzeichnet, dass** das Übertragungsmittel ein Handy ist, und die Lokalisierungs- und Identifizierungsinformationen des Benutzers (B) regelmäßig oder zeitweilig übertragen werden.

3. System gemäß irgendeiner der Anforderungen 1 und 2, wobei unter der Vielzahl der Dienstleistungen mindestens eine der Dienstleistungen kostenpflichtig ist und **dadurch gekennzeichnet, dass** das Steuerungsmodul (2) ein Sub-Modul (24) der Kalkulation der Zugangskosten pro bestimmten Benutzer (B) zu einer bestimmten Dienstleistung (Dg) enthält.

4. System gemäß irgendeiner der Anforderungen 1 bis 3, **dadurch gekennzeichnet, dass** es Mittel (4) der Kontrolle und der Zugangsverweigerung des Benutzers (B) zu der Dienstleistung (Dg), aktivierbar vor, bzw. während, und /oder nach der Nutzung der Dienstleistung (Dg), bietet.

5. System gemäß der Anforderung 4, **dadurch gekennzeichnet, dass** es Mittel (4) der Zugangsverweigerung des Benutzers (B) zur Dienstleistung (Dg) aktivierbar vor, bzw. während, und /oder nach der Nutzung der Dienstleistung (Dg) bietet, und dass diese eine Möglichkeit des Eingriffs (41) in der Nähe oder entfernt vom Benutzer beinhalten, sowie dass und das Steuerungsmodul (2) ein Sub-Modul der Übertragung einer Information der Zugangsverweigerung an das Übertragungsgerät (41) enthält.

6. System gemäß irgendeiner der Anforderungen 1 bis 5, **dadurch gekennzeichnet, dass** es Möglichkeiten einer Schnittstelle (5) für den Benutzer (B) bietet, und dem Benutzer (B) ermöglicht, sich in einer Datenbank (1), einer bestimmten Dienstleistung (Dg) eines Dienstleisters (D) zu registrieren, seine persönlichen Informationen in Bezug auf die Dienstleistung und den genannten Dienstleister (D) zu empfangen und zu aktualisieren.

7. System gemäß irgendeiner der Anforderungen 1 bis 6, **dadurch gekennzeichnet, dass** es eine Schnittstelle für Dienstleister (D) bietet, und dem Dienstleister (D) ermöglicht, sich in einer Datenbank (1) zu registrieren, zwecks Bereitstellung einer bestimmten Dienstleistung (Dg) und Informationen bezüglich der angebotenen Dienstleistung (Dg) zu aktualisieren und zu empfangen.

8. System gemäß irgendeiner der Anforderungen 1 bis 7, in dem ein bestimmter Benutzer (B) im Laufe eines bestimmten Zeitraumes eine oder mehrere Dienstleistungen (Dg) nutzen kann, die durch einen oder mehrere Dienstleister (D) bereitgestellt werden. Dieses System ist **dadurch gekennzeichnet, dass** das Steuerungsmodul (2) ein Sub-Modul (25) enthält, das die genutzten Dienstleistungen (Dg) zentralisiert und eine Zusammenstellung dieser oder eines Teils der während eines bestimmten Zeitraumes genutzten Dienstleistungen auf ein und derselben Rechnung ermöglicht.

9. System gemäß irgendeiner der Anforderungen 1 bis 8, **dadurch gekennzeichnet, dass** das Steuerungsmodul (2) ein Sub-Modul (26) der Zusammenstellung der sich überschneidenden Forderungen mehrerer Dienstleister (D) enthält.

10. System gemäß irgendeiner der Anforderungen 1 bis 9, **dadurch gekennzeichnet, dass** das Steuerungsmodul (2) ein Sub-Modul (27) enthält, das Zahlungsauffälligkeiten zentralisiert.

11. System gemäß irgendeiner der Anforderungen 1 bis 10, **dadurch gekennzeichnet, dass** das Steuerungsmodul (2) ein Sub-Modul (28) enthält, das Verstöße und Sanktionen zentralisiert, und besonders die Wiederholung von Verstößen anzeigt und regelt.

12. System gemäß irgendeiner der Anforderungen 1 bis 11, **dadurch gekennzeichnet, dass** das Steuerungsmodul (2) ein Mittel der Zeiterfassung (29) des Benutzerzugangs (D) zu einer Dienstleistung (Dg) eines Dienstleisters (D), sowie die Dauer dieser Dienstleistung (Dg) enthält.

13. Verfahren der übergreifenden Steuerung mehrerer geolokalisierbarer Dienstleistungen (Dg), die nicht auf eine bestimmte geografische Zone begrenzt sind, das von verschiedenen Dienstleistern (D) und über eine Zahlstelle Benutzern (B) angeboten wird. Dieses Verfahren ist über ein elektronisches Datenverarbeitungssystem computerisiert, und dieses System ermöglicht Benutzern (B) sich allgemein für eine bestimmte Dienstleistung zu registrieren, die eine Datenbank (1) und deren Steuerungsmodul (2) beinhaltet. Diese Datenbank (1) ermöglicht, verschiedene Arten von Dienstleistungen (S) gleichzeitig zu steuern, einschließlich dynamisch geregelter Dienstleistungen (S), ausgehend von veränderbaren Parametern und folgendes beinhaltet:
- Informationen zur Identifizierung einer Vielzahl von Benutzern (B),
- Informationen zur Identifizierung einer Vielzahl von Dienstleistungen (Dg), die Informationen zur Lokalisierung dieser Dienstleistungen (Dg) enthalten,
- Informationen zur Identifizierung einer Vielzahl von Dienstleistern (D),
- Informationen bezüglich der Zugangsberechtigung der genannten Benutzer (B) zu einer oder mehrerer der genannten Dienstleistungen (Dg),
Das genannte Verfahren ist durch folgende Inhalte gekennzeichnet:
- einen Abschnitt der automatischen Übertragung durch ein Übertragungsgerät (3), das dauernd oder zeitweilig Informationen zur Lokalisierung und zur Identifizierung eines bestimmten Benutzers (B) übermittelt,
- einen Abschnitt des automatischen Empfangs dieser genannten Informationen zur Lokalisierung und zur Identifizierung eines bestimmten Benutzers (B),
- einen Abschnitt des automatischen Vergleichs der genannten Informationen bezüglich der Lokalisierung eines bestimmten Benutzers (B), die im Abschnitt des automatischen Empfangs mit den genannten Informationen bezüglich der Lokalisierung der Dienstleistungen (Dg), die in der genannten Datenbank (1) gespeichert sind.
- falls dieser Abschnitt des automatischen Vergleichs zeigt, dass die genannten Informationen bezüglich der Lokalisierung eines bestimmten Benutzers (B) mit den genannten Informationen bezüglich der Lokalisierung einer Dienstleistung (Dg) übereinstimmen, einen Abschnitt der automatischen Kontrolle der Zugangsberechtigung des genannten Benutzers (B) zu dieser bestimmten Dienstleistung (Dg) in Abhängigkeit von diesen Informationen bezüglich der Zugangsberechtigung und der Identifizierung des Benutzers (B) in der Datenbank (1)
- einen Abschnitt der Tarifauswahl gemäss einer genutzten Dienstleistung, die genannten Parameter berücksichtigt und
- einen Abschnitt der Kalkulation eines zu zahlenden Betrags in Abhängigkeit des im Abschnitt der Tarifauswahl gewählten Tarifs,
wobei das genannte Verfahren gleichermaßen **dadurch gekennzeichnet ist, dass** es kein physikalisches Zugangsgerät in der Nähe der genannten Dienstleistungen nutzt.

14. Verfahren gemäß der Anforderung 13, **dadurch gekennzeichnet, dass** es einen Abschnitt der Rechnungsstellung an den Benutzer (B) aufgrund seines Zugangs zur Nutzung der Dienstleistung (Dg) des Dienstleisters (D) und / oder die Dauer der Nutzung dieser Dienstleistung beinhaltet.

15. Verfahren gemäß irgendeiner der Anforderungen 13 und 14, **dadurch gekennzeichnet, dass** es einen Abschnitt der Feststellung eines Verstoßes während des Abschnitts der Zugangskontrolle des Benutzers (B) zu einer Dienstleistung (S) anzeigt, dass dieser Benutzer (B) nicht in der Datenbank (1) zur Nutzung dieser Dienstleistung (Dg) registriert ist, oder dass die Berechtigung des Zugangs zu dieser Dienstleistung ungültig ist.
